Europäisches Patentamt

European Patent Office

Office européen des brevets

(11) Publication number: **0 266 059 B1**

# EUROPEAN PATENT SPECIFICATION

(45) Date of publication of patent specification: **04.03.92**

(51) Int. Cl.⁵: **B01D 61/24**, B01D 61/44, //C01B21/14

(21) Application number: **87308519.5**

(22) Date of filing: **25.09.87**

(54) **Production of hydroxylamine nitrate by dialysis.**

(30) Priority: **25.09.86 JP 227622/86**
**25.09.86 JP 227623/86**

(43) Date of publication of application:
**04.05.88 Bulletin 88/18**

(45) Publication of the grant of the patent:
**04.03.92 Bulletin 92/10**

(84) Designated Contracting States:
**DE FR GB**

(56) References cited:
**GB-A- 1 427 689**
**US-A- 2 737 486**
**US-A- 3 695 834**
**US-A- 3 766 038**

**IND. ENG. PROCESS DES. DEV., vol. 20, 1981, pp. 361-366; Y. CHANG et al.:"Conversion of hydroxylamine hydrochloride to hydroxylamine nitrat by electrodialysis and water-splitting processes"**

(73) Proprietor: **SUMITOMO CHEMICAL COMPANY, LIMITED**
**Kitahama 4-chome 5-33**
**Chuo-ku Osaka 541(JP)**

(72) Inventor: **Matsuda, Teruo**
**6-19, Hoshigoe-cho**
**Niihama-shi Ehime(JP)**
Inventor: **Miki, Masayoshi**
**4-14, Hoshigoe-cho**
**Niihama-shi Ehime(JP)**
Inventor: **Ochi, Hiromu**
**4-10-24, Kitauchi-cho**
**Niihama-shi Ehime(JP)**

(74) Representative: **Diamond, Bryan Clive et al**
**Gee & Co., Chancery House, Chancery Lane**
**London WC2A 1OU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to a process for production of hydroxylamine nitrate by an electrodialysis method or a diffusion dialysis method using a cation exchange membrane.

Hydroxylamine nitrate is a useful compound as, for example, a reducing agent of plutonium in an extraction step in the reprocessing of a spent nuclear fuel.

The following methods are known for the production of hydroxylamine nitrate:

(1) Conversion of hydroxylamine sulfate into a corresponding nitrate using a cation exchange resin (see Ind. Eng. Chem. Process Des. Dev., 16, p. 220 (1977) and JP-A-48078975).

(2) Blowing nitrous oxide and hydrogen gases in the presence of a platinum catalyst (see DE-A-2,100,036 and JP-A-48083725).

(3) Reacting hydroxylamine sulfate with barium nitrate (see U.S.-A-4,066,736).

(4) Hydrogenating nitric acid in the presence of a palladium catalyst (see NL-A-7,009,685).

(5) Hydroxylamine sulfate or hydrochloride and nitric acid are electrodialysed using an ion exchange membrane (see FR-A-2,243,904 and Ind. Eng. Chem. Process Des. Dev., 20, p 361 (1981)).

Among these conventional technologies, in Method (1) wherein a sulfate is converted into a corresponding nitrate using a cation exchange resin, a hydroxylammonium ion ($NH_3OH^+$) in the hydroxylamine sulfate is carried on a cation exchange resin and then eluted with a nitric acid solution. This method is, however, a complicated batch process and there is a danger of explosion by the reaction between the ion exchange resin and nitric acid (see Chem. Eng. Nov., 17, p 271 (1980)).

In Methods (2) and (4) wherein nitrous oxide or nitric acid is hydrogenated in the presence of a catalyst, the use of dangerous nitrous oxide and hydrogen is essential; the catalyst to be used is a special one; and regeneration of the catalyst is complicated.

In Method (3), handling of by-product barium sulfate is complicated, and disposal of the barium sulfate is also troublesome.

In Method (5) wherein hydroxylamine nitrate is produced from hydroxylamine sulfate or hydrochloride by an electrodialysis method using cation and anion exchange membranes and which utilizes a double decomposition reaction, four different types of fluids are passed through four chambers of an electrodialysis tank wherein the four chambers are arranged as one block, and are partitioned alternately by cation exchange membranes and anion exchange membranes, and the product hydroxylamine nitrate is drawn out of one of the four chambers. This makes the process complicated because the method requires four units of pipes for circulating fluid, direct current power sources, and auxiliary facilities, and the productivity per equipment and total area of the membrane is low.

In order to overcome the above-mentioned problems in the conventional production methods of hydroxylamine nitrate and establish an inexpensive and simple process for production of hydroxylamine nitrate, the inventors have made extensive investigations; they have found that hydroxylamine nitrate can be produced readily and effectively by an electrodialysis method or a diffusion dialysis method using only a cation exchange membrane.

Thus, this invention provides a process for production of hydroxylamine nitrate by electrodialysis or diffusion dialysis between aqueous solutions of hydroxylamine sulfate and nitric acid, wherein the hydroxylamine nitrate is formed in the nitric acid solution, characterised in that the respective solutions are separated only by a cation exchange membrane and that the concentration of hydroxylamine sulfate is maintained much higher than that of hydroxylamine nitrate.

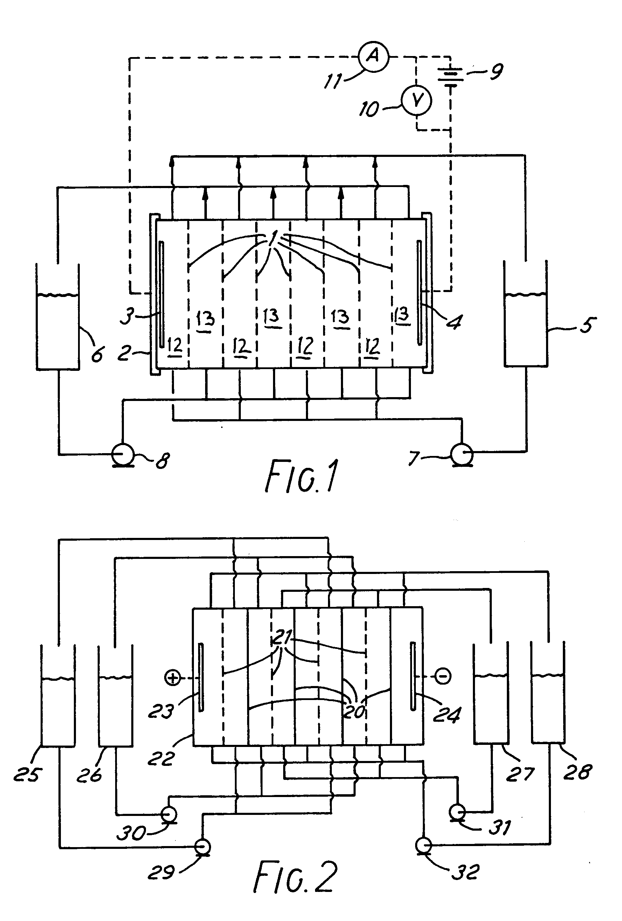

The electrodialysis according to this invention is first described by reference to Fig. 1 of the accompanying drawings (Fig. 2 shows apparatus used in the Comparative Example).

Fig. 1 is an example of an electrodialysis unit of this invention, wherein an electrodialysis tank (2) is constructed by assembling a number of cation exchange membranes (1). Between an anode (3) and a cathode (4) is applied a direct current voltage via a direct current power source (9).

Two types of liquids having a different formulation are alternatively supplied and circulated into the respective chambers partitioned from each another by the cation exchange membranes (1) as shown in Fig. 1. In other words, an aqueous solution of hydroxylamine sulfate is placed in a tank (5) and sent into alternate chambers (12) of the electrodialysis tank (2) through a conduit by means of a pump (7). On the other hand, an aqueous solution of nitric acid is placed in a tank (6) and sent into each of the other alternate chambers (13) of the electrodialysis tank (2) which are different from the foregoing chambers through a conduit by means of a pump (8).

In Fig. 1, numerals (10) and (11) denote a volt meter and an ammeter, respectively.

Hydroxylammonium ion ($NH_3OH^+$) in the aqueous solution of hydroxylamine sulfate is attracted by the cathode in the electrodialysis tank and permeates through the cation exchange membrane to move into the side of the aqueous solution of nitric acid. Sulfuric acid anion ($SO_4{}^{2-}$) in the aqueous solution of hydroxylamine sulfate remains in the solution as it does not permeate by being interrupted by the cation exchange membrane. On the other hand, in the side of the aqueous solution of nitric acid, hydrogen ion ($H^+$) permeates through the cation exchange membrane to move into the chamber of the hydroxylamine sulfate side, and remaining nitric acid anion ($NO_3{}^-$) binds with the permeated hydroxylammonium ion to form hydroxylamine nitrate, as illustrated by the following equation.

$$NO_3{}^- + NH_3OH^+ \rightarrow NH_3OH\text{-}NO_3$$

In the chamber of the hydroxylamine sulfate side, sulfuric acid is formed, as illustrated by the following equation.

$$SO_4{}^{2-} + 2H^+ \rightarrow H_2SO_4$$

The current density for the electrodialysis is not so important that even a low current density is enough for achieving the dialysis of hydroxylammonium ion.

As the cation exchange membrane which is used in this invention, there are employable commercially available strongly acidic cation exchange membranes whose substrate is made of a styrene-divinylbenzene copolymer. Examples include Neosepta® Cm-1 (made by Tokuyama Soda Co., Ltd.), Selemion® CMV (made by Asahi Glass Co., Ltd.), and Aciplex® K-101 (made by Asahi Chemical Industry Co., Ltd.).

There is no particular limitation on the electrodes. Examples are platinum-plated titanium as the anode and stainless steel as the cathode.

Also, there is no particular limitation on the temperature. Usually, the process of this invention is carried out at room temperature without particularly heating or cooling.

Next, the diffusion dialysis is described.

In the diffusion dialysis, equipment is the same as in the case of the electrodialysis except that a diffusion dialysis unit without the anode (3), cathode (4), and direct current power source (9) is used or that a direct current is not applied between the anode (3) and the cathode (4).

Two types of liquids having a different formulation are alternatively supplied and circulated into the respective chambers partitioned from each another by the cation exchange membranes (1) as shown in Fig. 1. In other words, an aqueous solution of hydroxylamine sulfate is placed in a tank (5) and sent into alternate chambers (12) of a diffusion dialysis tank (2) through a conduit by means of a pump (7). On the other hand, an aqueous solution of nitric acid is placed in a tank (6) and sent into alternate chambers (13) of the diffusion dialysis tank (2) which are different from the foregoing chambers through a conduit by means of a pump (8).

In the diffusion dialysis tank, hydroxylammonium ion ($NH_3OH^+$) of hydroxylamine sulfate permeates through the cation exchange membrane due to a concentration difference between the neighboring chambers and moves into the region of the aqueous solution of nitric acid. Sulfuric acid anion ($SO_4{}^{2-}$) remains without permeating by the interruption of the cation exchange membrane.

On the other hand, from the chamber of aqueous solution of nitric acid, hydrogen ion ($H^+$) permeates through the membrane and into the solution of hydroxyl amine sulfate; the remaining nitric acid anion ($NO_3{}^-$) binds with the permeated hydroxylammonium ion to form hydroxylamine nitrate, as illustrated by the following equation.

$$NO_3{}^- + NH_3OH^+ \rightarrow NH_3OH\text{-}NO_3$$

In the chamber of the hydroxylamine sulfate, sulfuric acid is formed, as illustrated by the following equation.

$$SO_4{}^{2-} + 2H^+ \rightarrow H_2SO_4$$

In each type of apparatus, the concentration of hydroxylamine sulfate is maintained much higher than that of hydroxylamine nitrate which is synthesized in the neighboring chamber partitioned by the cation exchange membrane. The concentration of hydroxylamine sulfate is preferably maintained higher than that of hydroxylamine nitrate by about one mole or more. Thus, not only is a high rate of dialysis obtained, but also a loss of hydroxylammonium ion ($NH_3OH^+$) caused by permeation from the chamber of formed hydroxylamine nitrate to that of hydroxylamine sulfate is reduced.

The concentration of hydroxylamine nitrate formed in the aqueous solution of nitric acid rises gradually, whereas the concentration of free nitric acid decreases conversely.

In accordance with the process of this invention, as compared with the conventional electrodialysis method, by use of only cation exchange membranes, not only the facilities can be greatly simplified, but also productivity per unit membrane area can be markedly improved. Thus, this invention is quite valuable from the industrial viewpoint.

This invention is described in further detail with reference to the following examples, but it is not intended to be limited thereto.

EXAMPLE 1

Manufacture of hydroxylamine nitrate was carried out by using an electrodialysis unit shown by Fig. 1 which is constructed of 21 pieces of Neosepta® CM-1 (made by Tokuyama Soda Co., Ltd.) with a size of 1 $dm^2$/piece as the cation exchange membranes (1).

A 1 $dm^2$ Pt-plated titanium plate was used as the anode (3), and a 1 $dm^2$ SUS-316 plate was used as the cathode (4).

A gap between the membranes (1) in this unit was approximately 1 mm.

500 ml of a 3.04N aqueous hydroxylamine sulfate solution and 500 ml of 1.32N nitric acid were charged into the tank (5) and tank (6), respectively, and these solutions were circulated through the electrodialysis tank (2) at flow rates of 2 ℓ/min by means of the pumps (7) and (8), respectively.

At the same time, a 4 V constant direct current voltage was applied between the anode (3) and the cathode (4) by the direct current power source (9).

At specified time intervals, the solutions in the tanks (5) and (6) were sampled for analysis of the concentrations of free acid and hydroxylamine. The results obtained are shown in Table 1.

The analysis of hydroxylamine was made by oximization of hydroxylamine with cyclohexanone and acidimetry of the liberated acid.

TABLE 1

| Time of electrodialysis (min) | Concentration of solution in Tank (5) (N) | | Concentration of solution in Tank (6) (N) | |
|---|---|---|---|---|
| | Hydroxylamine sulfate | Free sulfuric acid | Hydroxylamine nitrate | Free nitric acid |
| 0 | 3.04 | 0.04 | 0.00 | 1.32 |
| 10 | 2.34 | 0.60 | 0.57 | 0.59 |
| 30 | 2.15 | 0.79 | 0.76 | 0.50 |
| 60 | 2.06 | 0.89 | 0.85 | 0.40 |

EXAMPLE 2

Using the same electrodialysis unit as in Example 1, hydroxylamine nitrate was produced under the following conditions.

500 ml of a 3.04N aqueous hydroxylamine sulfate solution and 500 ml of 1.21N nitric acid were charged into the tank (5) and tank (6), respectively, and these solutions were circulated through the electrodialysis tank (2) at flow rates of 2 ℓ/min by means of the pumps (7) and (8), respectively.

At the same time, a 2 V constant direct current voltage was applied between the anode (3) and cathode (4) by the direct current power source (9) to proceed the electrodialysis. The results obtained are shown in Table 2.

EP 0 266 059 B1

TABLE 2

| Time of electrodialysis (min) | Concentration of solution in Tank (5) (N) | | Concentration of solution in Tank (6) (N) | |
|---|---|---|---|---|
| | Hydroxylamine sulfate | Free sulfuric acid | Hydroxylamine nitrate | Free nitric acid |
| 0 | 3.04 | 0.01 | 0.00 | 1.21 |
| 30 | 2.18 | 0.80 | 0.74 | 0.41 |
| 60 | 2.06 | 0.88 | 0.80 | 0.36 |

EXAMPLE 3

Hydroxylamine nitrate was produced by using a diffusion dialysis unit wherein the anode (3), the cathode (4), and the direct current power source (9) are omitted out of the electrodialysis unit shown in Fig. 1 which is constructed by 21 pieces of Neosepta® CM-1 (made by Tokuyama Soda Co., Ltd.) with a size of 1 $dm^2$/piece as the cation exchange membranes (1).

A gap between the membranes (1) in this unit was approximately 1 mm.

500 ml of a 2.0N aqueous hydroxylamine sulfate solution and 500 ml of 0.82N nitric acid were charged into the tank (5) and tank (6), respectively, and these solutions were circulated through the diffusion dialysis tank (2) at flop rates of 2 ℓ/min by means of the pumps (7) and (8), respectively.

At specified time intervals, the solutions in the tanks (5) and (6) were sampled for analysis of the concentrations of free acid and hydroxylamine. The results obtained are shown in Table 3.

TABLE 3

| Time of electrodialysis (min) | Concentration of solution in Tank (5) (N) | | Concentration of solution in Tank (6) (N) | |
|---|---|---|---|---|
| | Hydroxylamine sulfate | Free sulfuric acid | Hydroxylamine nitrate | Free nitric acid |
| 0 | 2.00 | 0.01 | 0.00 | 0.82 |
| 5 | 1.64 | 0.29 | 0.31 | 0.48 |
| 10 | 1.47 | 0.46 | 0.44 | 0.33 |
| 20 | 1.23 | 0.64 | 0.59 | 0.18 |

COMPARATIVE EXAMPLE

Hydroxylamine was produced by means of an electrodialysis unit shown in Fig. 2 which is constructed by 4 pieces of cation exchange membranes "Neosepta® CM-1" (made by Tokuyama Soda Co., Ltd.) with a size of 2 $dm^2$/piece and 4 pieces of anion exchange membranes "Neosepta® AM-1" (made by Tokuyama Soda Co., Ltd.) with a size of 2 $dm^2$/piece.

An electrodialysis tank (22) was constructed by cation exchange membranes (20), anion exchange membranes (21), an anode (23) made of a Pt-plated titanium plate, and a cathode (24) made of an SUS-316 plate.

500 ml of a 1.4N aqueous hydroxylamine sulfate solution was fed into a tank (25); 500 ml of a 0.2N aqueous nitric acid solution was fed to a tank (26); 500 ml of a 1.3N aqueous nitric acid solution was fed to a tank (27); and 1000 ml of a 0.2N aqueous sulfuric acid solution was fed to a tank (28). Pumps (29), (30), (31), and (32) were operated to circulate the solutions through the electrodialysis tank (22), respectively at flow rates of from about 200 to 300 ml/min.

At the same time, a direct current voltage was applied between the electrodes, and the electrodialysis was performed at a current density of 100 A/$m^2$.

At specified time intervals, the solutions in the respective tanks were sampled to analyze the concentrations of free acid and hydroxylamine. The results are shown in Table 4.

5

TABLE 4

| | | Time of dialysis (min) | | |
| --- | --- | --- | --- | --- |
| | | 0 | 30 | 60 |
| Solution concentration in tank (25) (N) | Hydroxylamine sulfate<br>Free sulfuric acid | 1.42<br>0.02 | 1.18<br>0.20 | 0.99<br>0.32 |
| Solution concentration in tank (26) (N) | Hydroxylamine nitrate<br>Free nitric acid | 0.02<br>0.17 | 0.26<br>0.15 | 0.45<br>0.16 |
| Solution concentration in tank (27) (N) | Hydroxylamine sulfate<br>Free nitric acid | 0.01<br>1.24 | 0.01<br>0.98 | 0.02<br>0.78 |
| Solution concentration in tank (28) (N) | Hydroxylamine sulfate<br>Free sulfuric acid | 0.0<br>0.20 | 0.0<br>0.23 | 0.0<br>0.26 |

**Claims**

1. A process for the production of hydroxylamine nitrate by electrodialysis or diffusion dialysis between aqueous solutions of hydroxylamine sulfate and nitric acid, wherein the hydroxylamine nitrate is formed in the nitric acid solution, characterised in that the respective solutions are separated only by a cation exchange membrane and that the concentration of hydroxylamine sulfate is maintained much higher than that of hydroxylamine nitrate.

2. A process as claimed in Claim 1, wherein said cation exchange membrane is a strongly acidic cation exchange membrane.

3. A process as claimed in Claim 1 or 2, wherein said concentration of hydroxylamine sulfate is maintained higher than the concentration of hydroxylamine nitrate by 1 mole or more.

4. A process as claimed in Claim 1, 2 or 3, wherein each of a hydroxylamine sulfate solution and a sulfuric acid solution is circulated into chambers of a dialysis tank, which are arranged for each solution to be circulated into adjacent alternate chambers.

5. An electrodialysis process as claimed in Claim 1, 2 or 3, wherin an anode used is a platinum-plated titanium plate, and a cathode used is of stainless steel.

**Revendications**

1. Un procédé de production du nitrate d'hydroxylamine par électrodialyse ou par dialyse par diffusion entre les solutions aqueuses de sulfate d'hydroxylamine et d'acide nitrique, selon lequel le nitrate d'hydroxylamine est formé dans la solution d'acide nitrique, caractérisé en ce que les solutions respectives sont séparées seulement par une membrane échangeuse de cations et que la concentration du sulfate d'hydroxylamine est maintenue très supérieure à celle du nitrate d'hydroxylamine.

2. Un procédé selon la revendication 1, selon lequel ladite membrane échangeuse de cations est une membrane échangeuse de cations fortement acide.

3. Un procédé selon la revendication 1 ou 2, selon lequel ladite concentration du sulfate d'hydroxylamine est maintenue supérieure à la concentration du nitrate d'hydroxylamine de 1 mol ou plus.

4. Un procédé selon la revendication 1, 2 ou 3, selon lequel une solution de sulfate d'hydroxylamine et une solution d'acide sulfurique sont chacune mises en circulation dans les chambres d'une cuve de dialyse, qui sont agencées pour que chaque solution circule dans des chambres alternées adjacentes.

**5.** Un procédé d'électrodialyse selon la revendication 1, 2 ou 3, selon lequel une anode utilisée est une plaque de titane plaqué de platine, et une cathode utilisée est de l'acier inoxydable.

**Patentansprüche**

**1.** Verfahren zur Herstellung von Hydroxylaminnitrat durch Elektrodialyse oder Diffusionsdialyse zwischen wäßrigen Lösungen von Hydroxylaminsulfat und Salpetersäure, wobei das Hydroxylaminnitrat in der Salpetersäurelösung entsteht, **dadurch gekennzeichnet,** daß die betreffenden Lösungen nur durch eine Kationenaustauschermembran getrennt sind und daß die Konzentration an Hydroxylaminsulfat weit höher als die an Hydroxylaminnitrat gehalten wird.

**2.** Verfahren nach Anspruch 1, wobei die Kationenaustauschermembran eine stark saure Kationenaustauschermembran ist.

**3.** Verfahren nach Anspruch 1 oder 2, wobei die Konzentration an Hydroxylaminsulfat 1 Mol oder höher als die Konzentration an Hydroxylaminnitrat gehalten wird.

**4.** Verfahren nach Anspruch 1, 2 oder 3, wobei man jeweils eine Hydroxylaminsulfatlösung und eine Schwefelsäurelösung in Kammern eines Dialysegefäßes zirkulieren läßt, die für jede Lösung so angeordnet sind, daß sie durch benachbarte alternierende Kammern zirkuliert.

**5.** Elektrodialyseverfahren nach Anspruch 1, 2 oder 3, wobei die verwendete Anode ein platiniertes Titanblech ist und die verwendete Kathode aus rostfreiem Stahl ist.

FIG.1

FIG.2